(19)

Europäisches
Patentamt
European
Patent Office
Office européen
des brevets

(11) **EP 3 955 205 A1**

(12) **EUROPEAN PATENT APPLICATION**
published in accordance with Art. 153(4) EPC

(43) Date of publication:
**16.02.2022  Bulletin 2022/07**

(21) Application number: **19924077.1**

(22) Date of filing: **12.04.2019**

(51) International Patent Classification (IPC):
**G06T 7/00** $^{(2017.01)}$

(52) Cooperative Patent Classification (CPC):
**G06T 7/00**

(86) International application number:
**PCT/JP2019/016034**

(87) International publication number:
**WO 2020/208824 (15.10.2020 Gazette 2020/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEC Corporation
108-8001 Tokyo (JP)**

(72) Inventor: **IIDA, Eri
Tokyo 108-8001 (JP)**

(74) Representative: **Betten & Resch
Patent- und Rechtsanwälte PartGmbB
Maximiliansplatz 14
80333 München (DE)**

(54) **INFORMATION PROCESSING DEVICE, INFORMATION PROCESSING METHOD, AND RECORDING MEDIUM**

(57)     An information processing apparatus according to one example embodiment including: a detecting unit that detects a plurality of pieces of biometrics information about the same subject from a captured image being input; an evaluating unit that evaluates quality in biometrics authentication for each piece of the biometrics information; and a specifying unit that specifies authentication biometrics information to be used in the biometrics authentication to the subject from among the plurality of pieces of biometrics information based on the quality.

FIG. 1

**Description**

[Technical field]

This disclosure relates to an information processing apparatus, an information processing method, and a storage medium.

[Background Art]

Patent Literature 1 discloses a biometrics authentication system for authenticating a user by matching two kinds of biometrics information (for example, a vein image and a fingerprint image) with two kinds of registered biometrics information registered in advance in a database.

[Citation List]

[Patent Literature]

PTL 1: Japanese Patent Application Laid-Open No. 2013-120580

[Summary of Invention]

[Technical Problem]

However, in the system described in Patent Literature 1, matching with the corresponding registered biometrics information is performed without considering the quality of the two kinds of biometrics information acquired. Therefore, when the quality of one kind or both kinds of the acquired biometrics information is low, the authentication accuracy may be low.
In view of the above problem, an object of this disclosure is to provide an information processing apparatus, an information processing method, and a storage medium capable of improving authentication accuracy in biometrics authentication.

[Solution to Problem]

According to an aspect of this disclosure, there is provided an information processing apparatus including: a detecting unit that detects a plurality of pieces of biometrics information about the same subject from a captured image being input; an evaluating unit that evaluates quality in biometrics authentication for each piece of the biometrics information; and a specifying unit that specifies authentication biometrics information to be used in the biometrics authentication to the subject from among the plurality of pieces of biometrics information based on the quality.
According to another aspect of this disclosure, there is provided an information processing method including: detecting a plurality of pieces of biometrics information about the same subject from a captured image being input; evaluating quality in biometrics authentication for each piece of the biometrics information; and specifying authentication biometrics information to be used in the biometrics authentication to the subject from among the plurality of pieces of biometrics information based on the quality.
According to yet another example aspect of this disclosure, provided is a storage medium storing a program that causes a computer to perform: detecting a plurality of pieces of biometrics information about the same subject from a captured image being input; evaluating quality in biometrics authentication for each piece of the biometrics information; and specifying authentication biometrics information to be used in the biometrics authentication to the subject from among the plurality of pieces of biometrics information based on the quality.

[Advantageous Effects of Invention]

According to this disclosure, it is possible to provide an information processing apparatus, an information processing method, and a storage medium capable of improving authentication accuracy in biometrics authentication.

[Brief Description of Drawings]

[FIG. 1]

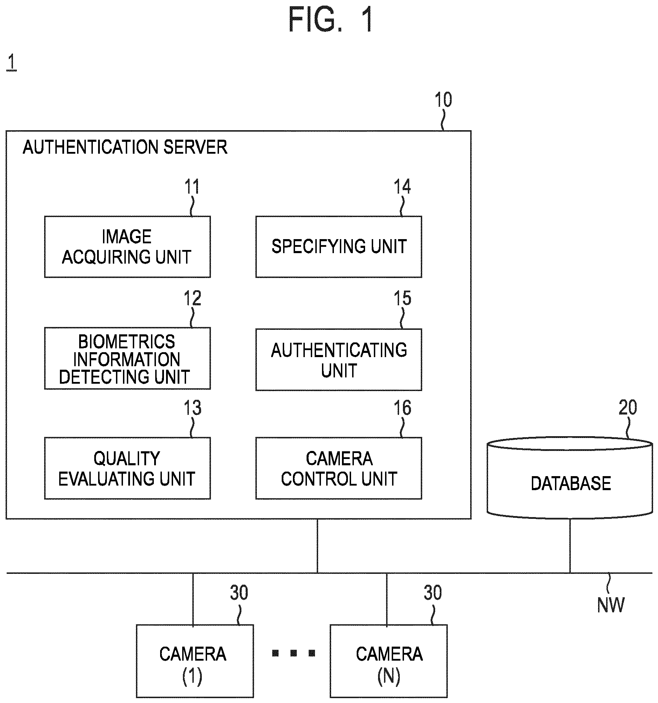

FIG. 1 is a block diagram showing an overall configuration example of a biometrics authentication system according to a first example embodiment.
[FIG. 2]

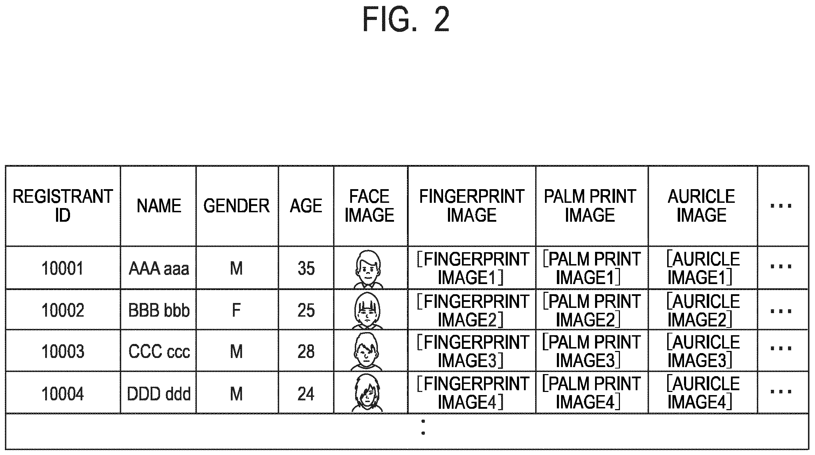

FIG. 2 is a diagram showing an example of registrant information stored in a database according to the first example embodiment.
[FIG. 3]

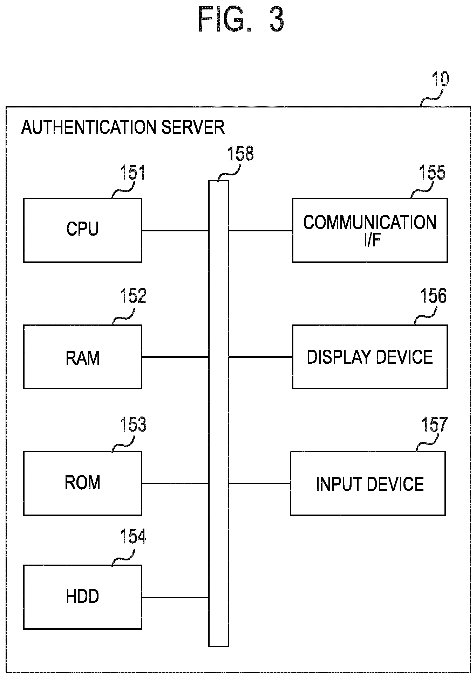

FIG. 3 is a block diagram showing a hardware configuration example of an authentication server according to the first example embodiment.
[FIG. 4]

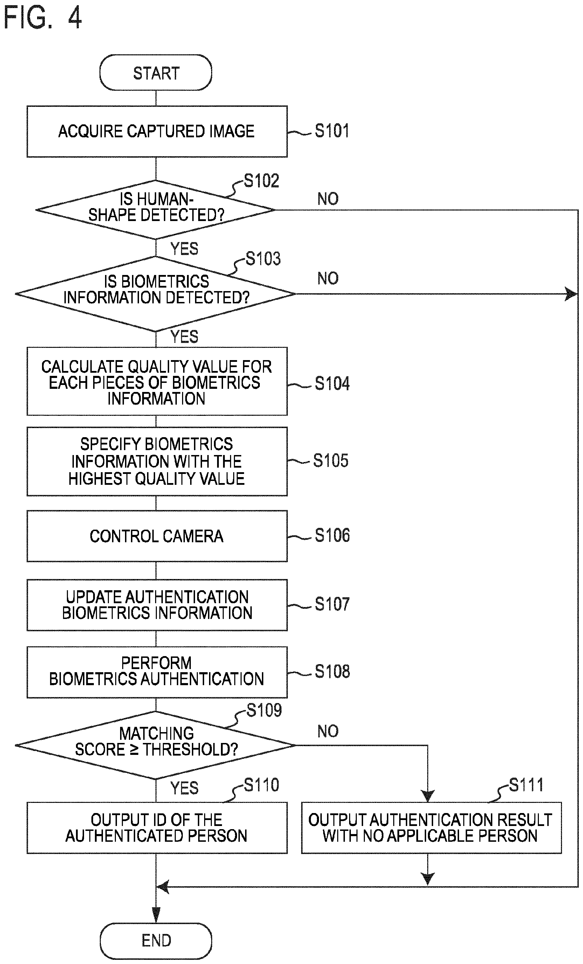

FIG. 4 is a flowchart showing an example of processing performed by an authentication server according to the first example embodiment.
[FIG. 5]

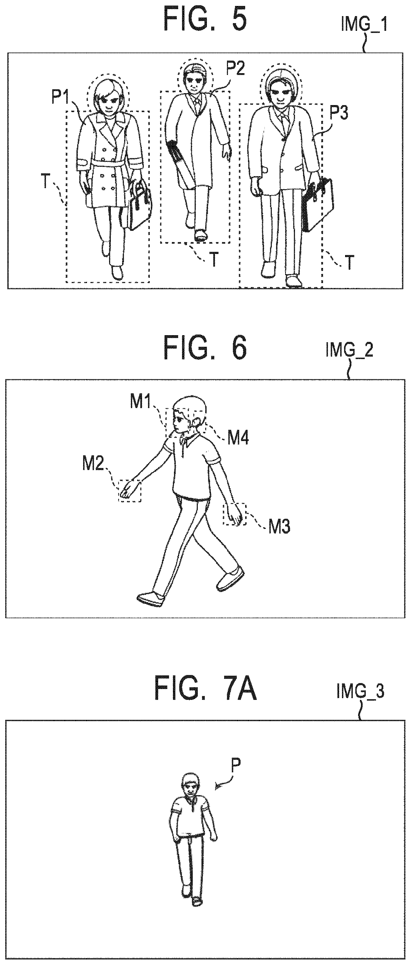

FIG. 5 is a diagram for explaining a method of detecting a person to be authenticated using a human-shape according to the first example embodiment.
[FIG. 6]
FIG. 6 is a diagram showing a plurality of kinds of biometrics information that is detected according to the first example embodiment.
[FIG. 7A]
FIG. 7A is a diagram for explaining a method of evaluating the quality of biometrics information according to the first example embodiment.
[FIG. 7B]

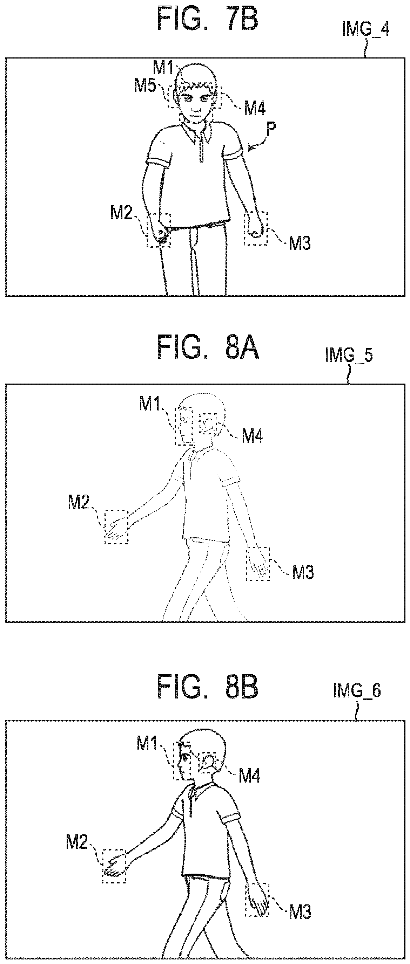

FIG. 7B is a diagram for explaining a method of evaluating the quality of biometrics information according to the first example embodiment.
[FIG. 8A]
FIG. 8A is a diagram for explaining a method of evaluating the quality of biometrics information according to the first example embodiment.
[FIG. 8B]
FIG. 8B is a diagram for explaining a method of evaluating the quality of biometrics information according to the first example embodiment.
[FIG. 9A]

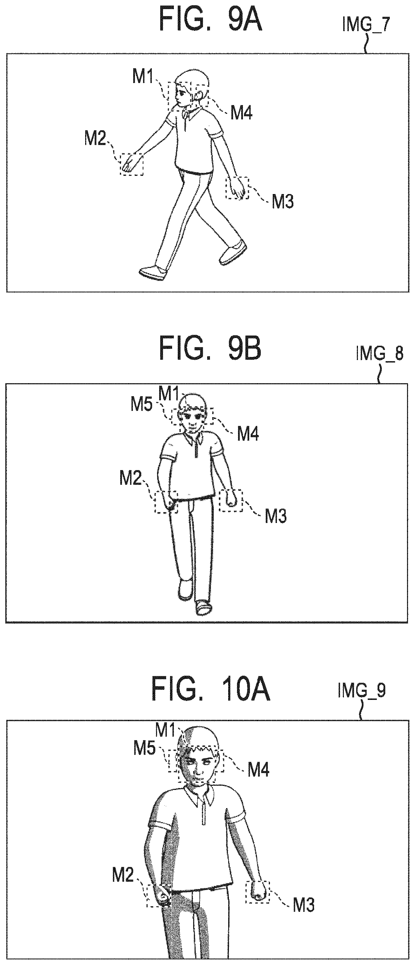

FIG. 9A is a diagram for explaining a method of evaluating the quality of biometrics information according to the first example embodiment.
[FIG. 9B]
FIG. 9B is a diagram for explaining a method of evaluating the quality of biometrics information according to the first example embodiment.
[FIG. 10A]
FIG. 10A is a diagram for explaining a method of evaluating the quality of biometrics information according to the first example embodiment.
[FIG. 10B]

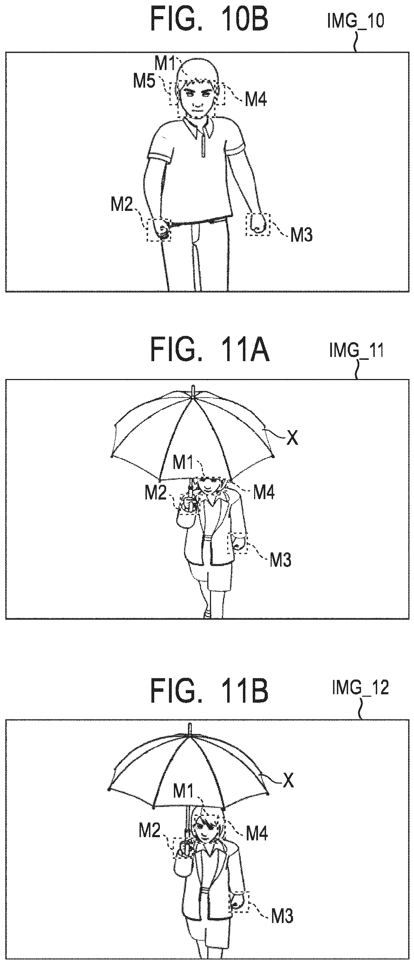

FIG. 10B is a diagram for explaining a method of evaluating the quality of biometrics information according to the first example embodiment.
[FIG. 11A]
FIG. 11A is a diagram for explaining a method of evaluating the quality of biometrics information according to the first example embodiment.
[FIG. 11B]
FIG. 11B is a diagram for explaining a method of evaluating the quality of biometrics information according to the first example embodiment.
[FIG. 12]

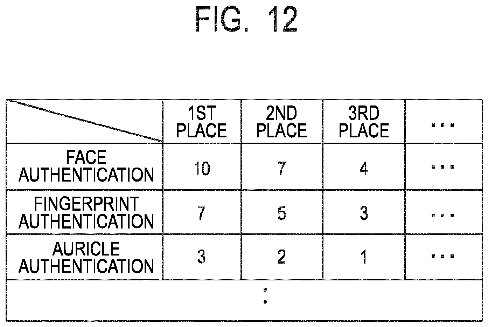

FIG. 12 is a diagram showing an example of a relationship between a plurality of kinds of biometrics authentications and weightings for a matching score according to a second example embodiment.
[FIG. 13]

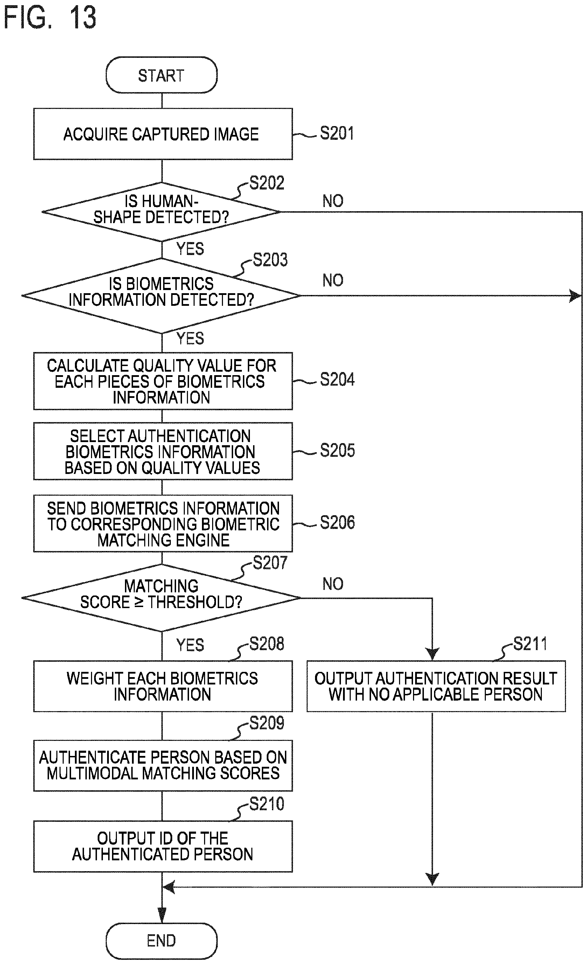

FIG. 13 is a flowchart showing an example of processing of the authentication server according to the second example embodiment.
[FIG. 14]

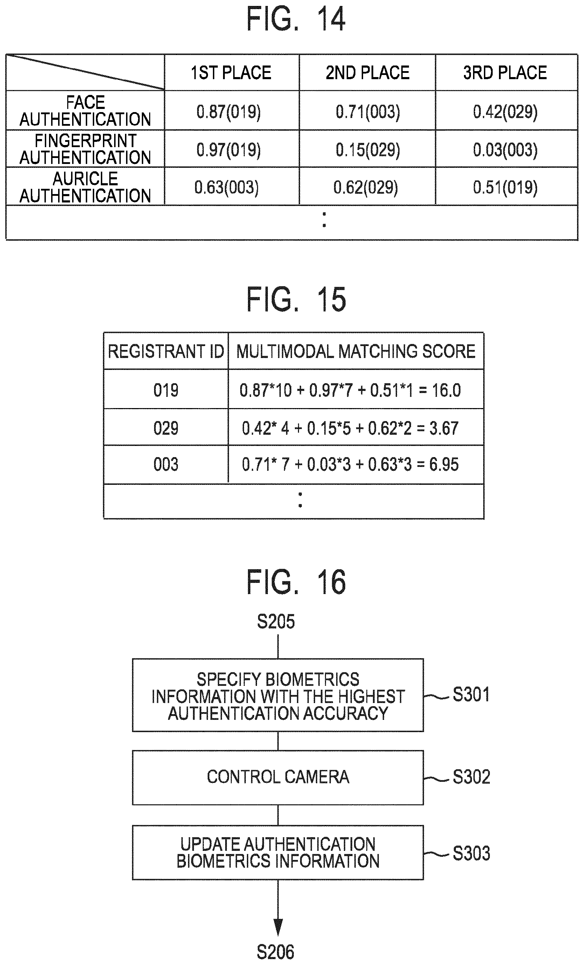

FIG. 14 is a diagram showing an example of a calculation result of a matching score according to the second example embodiment.
[FIG. 15]

FIG. 15 is a diagram showing an example of a method of calculating a multimodal matching score and a calculation result according to the second example embodiment.
[FIG. 16]
FIG. 16 is a flowchart showing an example of processing of the authentication server according to a third example embodiment.
[FIG. 17]

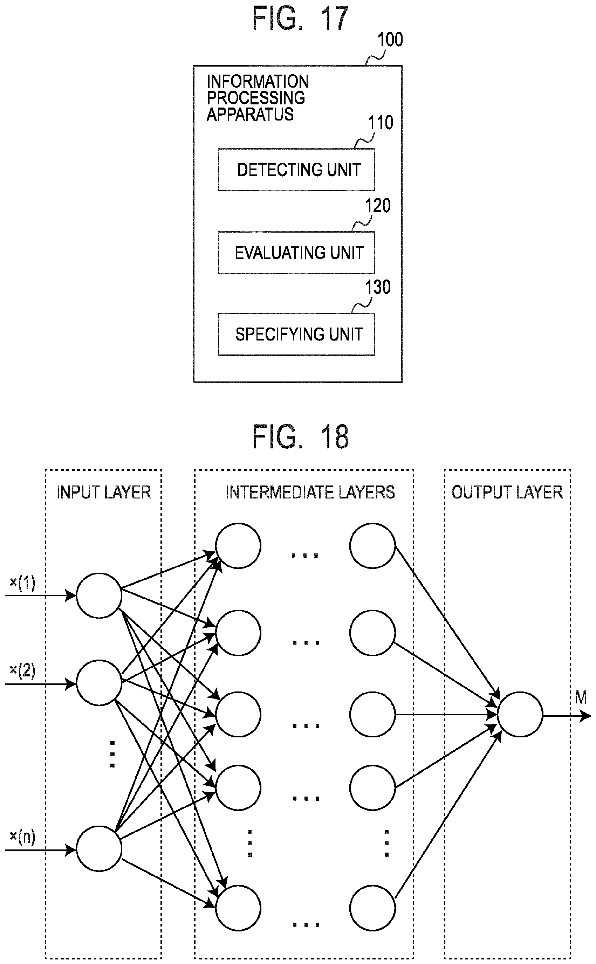

FIG. 17 is a block diagram showing functions of an information processing apparatus according to a fourth example embodiment.
[FIG. 18]
FIG. 18 is a schematic diagram showing learning processing using a neural network according to a modified example embodiment.


[Description of Embodiments]

Exemplary example embodiments of the disclosure will be described below with reference to the drawings. Throughout the drawings, similar features or corresponding features are labeled with the same references, and the description thereof may be omitted or simplified.


[First Example Embodiment]

First, a configuration of a biometrics authentication system 1 according to the present example embodiment will be described with reference to FIGS. 1 to 3. FIG. 1 is a block diagram showing an overall configuration example of a biometrics authentication system 1 according to the present example embodiment. The biometrics authentication system 1 is an information processing system in which an authentication server 10, a database 20, and cameras 30 are connected via a network NW such as a Local Area Network (LAN) or the Internet. The biometrics authentication system 1 is installed in various facilities such as a store like a retail store or a department store, a company, a transportation facility, and a factory.

The authentication server 10 is an information processing apparatus that authenticates whether or not a person detected from a captured image is a person (Hereinafter, this is referred to as a "registrant".) in which biometrics information is registered in advance in the database 20. The authentication server 10 includes an image acquiring unit 11, a biometrics information detecting unit 12, a quality evaluating unit 13, a specifying unit 14, an authenticating unit 15, and a camera control unit 16. The function of each unit will be described in detail later.

FIG. 2 is a diagram showing an example of registrant information stored in the database 20. The database 20 stores attribute information (name, age, gender, etc.) of the registrant and a plurality of kinds of biometrics information in association with the registrant ID identifying the registrant. The phrase "biometrics information" according to the present example embodiment means a biometrics image and a feature amount extracted from the biometrics image. As shown in FIG. 2, examples of the biometrics image include a face image, a palm print image, a fingerprint image, and an auricle image. The face feature amount is obtained by calculating information on face features and converting the calculated information into data.

The cameras 30 are, for example, capturing devices such as security cameras installed in any number in a monitoring area of a facility such as a store or a company, and sequentially transmit captured image data to the authentication server 10. In FIG. 1, the cameras 30 are wired to the authentication server 10 via the network NW, but the connection method is not limited to wired connection. The cameras 30 may be wirelessly connected to the authentication server 10. In FIG. 1, the number of cameras 30 is a plurality (N ≥ 2), but may be a single number.

FIG. 3 is a block diagram showing a hardware configuration example of the authentication server 10 according to the present example embodiment. The authentication server 10 includes a CPU (Central Processing Unit) 151, a RAM (Random Access Memory) 152, a ROM (Read Only Memory) 153, and an HDD (Hard Disk Drive) 154 as a computer that performs calculation, control, and storage. The authentication server 10 includes a communication I /F (interface) 155, a display device 156, and an input device 157. The CPU 151, RAM 152, ROM 153, HDD 154, communication I /F 155, display device 156, and input device 157 are interconnected via a bus line 158. The display device 156 and the input device 157 may be connected to the bus line 158 via a driving device (not shown) for driving these devices.

The CPU 151 is a processor having a function of performing a predetermined operation in accordance with a program stored in the ROM 153, the HDD 154, or the like and controlling each unit of the authentication server 10. The RAM 152 is constituted by a volatile storage medium, and provides a temporary memory area necessary for the operation of the CPU 151. The ROM 153 is constituted by a non-volatile storage medium, and stores necessary information such as a program used for the operation of the authentication server 10. The HDD 154 is constituted by a non-volatile storage medium, and is a storage device that stores data necessary for processing, an operation program of the authentication server 10, and the like.

The communication I/F 155 is a communication interface based on standards such as Ethernet (registered trademark), Wi-Fi (registered trademark), 4G, etc., and is a module for communication with other devices. The display device 156 is a liquid crystal display, OLED display, or the like, and is used to display images, characters, interfaces, or the like. The input device 157 is a keyboard, a pointing device, or the like, and is used by the user to operate the authentication server 10. Examples of the pointing device include a mouse, a trackball, a touch panel, and a pen tablet. The display device 156 and the input device 157 may be integrally formed as a touch panel.

The CPU 151 loads a program stored in the ROM 153, the HDD 154, or the like into the RAM 152 and executes the program. Thus, the CPU 151 realizes the functions of the image acquiring unit 11, the biometrics information detecting unit 12, the quality evaluating unit 13, the specifying unit 14, the authenticating unit 15, the camera control unit 16, and the like.

Note that the hardware configuration shown in FIG. 3 is an example, and other devices may be added or some of the devices may not be provided. Further, some devices may be replaced by other devices having similar functions. Further, some functions of the present example embodiment may be provided by another apparatus via the network NW, or the functions of the present example embodiment may be realized by being distributed among a plurality of apparatuses. For example, the HDD 154 may be replaced by an SSD (Solid State Drive) using a semiconductor memory, or may be replaced by a cloud storage.

Next, the operation of the biometrics authentication system 1 configured as described above will be described. FIG. 4 is a flowchart showing an example of processing of the authentication server 10 according to the present example embodiment. This processing is executed, for example, each time a captured image is acquired from the camera 30.

First, the authentication server 10 (image acquiring unit 11) acquires a captured image from the camera 30 (step S101). Next, the authentication server 10 (biometrics information detecting unit 12) determines whether or not there is a subject that matches a predetermined human-shape in the captured image (step S102) .

When the authentication server 10 (biometrics information detecting unit 12) determines that there is a subject that matches the predetermined human-shape in the captured image (step S102: YES), the process proceeds to step S103. On the other hand, when the authentication server 10 determines that there is no subject that matches the predetermined human-shape in the captured image (step S102: NO), the process of FIG. 4 ends.

FIG. 5 is a diagram for explaining a method of detecting a person (subject) to be authorized using a human-shape according to the present example embodiment. Here, it is shown that three persons to be authenticated P1 to P3 are detected from the captured image IMG_1 by pattern matching with a predetermined human-shape T. It is preferable that the human-shape T have a plurality of shape patterns prepared in advance so as to correspond to various postures of the human body. Since an object other than a human can be excluded by using the human-shape T, the detection speed of the subject can be improved.

In step S103, the authentication server 10 (biometrics information detecting unit 12) determines whether or not the biometrics information of the subject can be detected from the image area of the subject that matches the human-shape. In the present example embodiment, the authentication server 10 (biometrics information detecting unit 12) detects a plurality of kinds of biometrics information which can be matched with a plurality of kinds of registered biometrics information registered in a database 20 from a single captured image.

FIG. 6 is a diagram for explaining a plurality of kinds of biometrics information detected according to the present example embodiment. Here, there is shown a case where three kinds of biometrics information, i.e., a face image M1, fingerprint images M2 and M3, and an auricle image M4, are detected for the same subject from a single captured image IMG_2.

When the authentication server 10 (biometrics information detecting unit 12) can detect biometrics information from a human-shaped subject (step S103: YES), the process proceeds to step S104. On the other hand, when the authentication server 10 cannot detect the biometrics information from the human-shaped subject (step S103: NO), the process of FIG. 4 ends. Specific examples of cases in which biometrics information cannot be detected include cases in which the body part of the subject is covered with accessories such as sunglasses, masks, gloves, and hats, and information for outputting the feature amount of the body part cannot be sufficiently detected, and cases in which information for outputting the feature amount cannot be detected depending on the direction of the body part. For example, in the example of FIG. 6, since the fingers of the lefthand face inward, the biometrics information of the high-quality fingerprint cannot be obtained.

In step S104, the authentication server 10 (quality evaluating unit 13) calculates a quality value for each of the plurality of kinds of biometrics information detected. The phrase "quality value" in the present embodiment indicates a degree indicating whether or not the biometrics information (biometrics image) detected from the captured image is suitable as a matching target for the registered biometrics information registered in the database 20 in the matching process executed in the biometrics authentication.

FIGS. 7A to 11B are diagrams for explaining a method of evaluating the quality of biometrics information of the authentication server 10 according to the present example embodiment. The authentication server 10 (quality evaluating unit 13) comprehensively evaluates the quality of the biometrics information based on a plurality of indexes. Hereinafter, a method of evaluating the quality of biometrics information will be described divided into five indexes. However, the index for evaluating the quality is not limited thereto.

FIGS. 7A and 7B show a case where the quality is evaluated based on the size of the acquisition region (Hereinafter referred to simply as "body part".) of the biometrics information in the captured images IMG_3 and IMG_4, respectively. In FIG. 7A, since the target person to be matched (subject) P in the captured image IMG_3 is small, the size of the body part from which the biometrics information is acquired is also small. In such a case, the quality value of the biometrics information detected from the captured image IMG_3 is low. On the other hand, in FIG. 7B, the sizes of the body parts (a face, ears, and hands) in the captured image IMG_4 are sufficiently large. In such a case, the quality value of the biometrics information is higher than that in the example of FIG. 7A. In FIG. 7B, the face image M1 is detected with high quality from the captured image IMG_4.

FIGS. 8A and 8B show a case where the quality is evaluated based on the sharpness of the body part in the captured images IMG_5 and IMG_6, respectively. In FIG. 8A, a plurality of body parts (a face, hands, and ears) from which biometrics information are acquired in the captured image IMG_5 is displayed in an unclear state. In such a case, all the quality value of the biometrics information are low. On the other hand, in FIG. 8B, each of the body parts is clearly displayed in the captured image IMG_6. In such a case, the quality value of the biometrics information is higher than that in the example of FIG. 8A.

FIGS. 9A and 9B show a case where the quality is evaluated based on the orientation of the body part in the captured images IMG_7 and IMG_8, respectively. FIG. 9A shows that the face direction of the target person to be matched in the captured image IMG_7 is greatly deviated from the shooting direction of the camera 30. Since the captured image IMG_7 includes only the left side portion of the face, it is difficult to calculate the face feature amount with high accuracy. In such a case, the quality value related to the face image M1 is low. On the other hand, FIG. 9B shows that the face of the target person to be matched is facing the front in the captured image IMG_8, that is, the target person to be matched is almost opposite to the camera 30. In this case, the quality value of the face image M1 is higher than that in the example of FIG. 9A. On the other hand, the quality values of the fingerprint images M2 and M3 and the auricle images M4 and M5 are lower than those in the example of FIG. 9A, depending on the grip of the hand and the direction of the face of the target person to be matched.

FIGS. 10A and 10B show a case where the quality is evaluated based on the brightness of the body part in the captured images IMG_9 and IMG_10, respectively. FIG. 10A shows a case where all the brightness of the body parts (a face, ears, and hands) from which the biometrics information is acquired in the captured image IMG_9 is low. In such a case, the quality value of the biometrics information detected from each part is low. On the other hand, FIG. 10B shows a case where the brightness of the same part in the captured image IMG_10 is high. In this case, the quality value of the biometrics information detected from each part is higher than that in the example of FIG. 10A. Even when the brightness is excessively high, the quality value of the biometrics information detected from each part may deteriorate. In such a case, the quality value of the biometrics information can be increased by decreasing the brightness to an appropriate value.

FIGS. 11A and 11B show a case where the quality is evaluated based on a positional relationship between the body part in the captured images IMG_11 and IMG_12 and the shielding object shielding the body part. In FIG. 11A, a part of a face from which biometrics information is acquired is shielded by an umbrella (a shielding object X) in the captured image IMG_11. In such a case, the quality value related to the face image M1 is low. On the other hand, in FIG. 11B, the face of the target person to be matched is not shielded by the umbrella in the captured image IMG_12. In such a case, the quality value related to the face image M1 is higher than that in the example of FIG. 11A.

Next, the authentication server 10 (specifying unit 14) sorts the calculated quality values in descending order, and specifies the biometrics information with the highest quality value as biometrics information (Hereinafter referred to as "authentication biometrics information".) to be used for biometric authentication (step S105). In the present example embodiment, it is assumed that one authentication biometrics information item is selected. When there is a plurality of pieces of biometrics information with the highest point, one can be selected based on a predetermined priority or authentication accuracy.

Next, the authentication server 10 (camera control unit 16) controls the camera 30 so that the quality value of the specified authentication biometrics information is further increased (step S106) to update the authentication biometrics information (step S107). The control target of the camera 30 corresponds to the index in the quality evaluation described above. Hereinafter, a control example corresponding to five indexes (size, sharpness, orientation, brightness, and presence or absence of a shielding object) will be described. However, the control target is not limited to these. The number of indexes to be controlled is not limited to one. The authentication server 10 (camera control unit 16) can control the camera 30 by combining any indexes.

(A) Size

As shown in FIG. 7A, when the sizes of the target person to be matched and the body part in the captured image are small, the authentication server 10 (camera control unit 16) changes the zoom magnification. Thus, the authentication server 10 (camera control unit 16) can acquire authentication biometrics information with higher quality by expanding the body part as shown in FIG. 7B.

(B) Sharpness

As shown in FIG. 8A, when the target person to be matched and the body part in the captured image are unclear, the authentication server 10 (camera control unit 16) changes, for example, the focal length in accordance with the body part. Thus, the authentication server 10 (camera control unit 16) can sharpen the body part from which the authentication biometrics information is acquired as shown in FIG. 8B and acquire the authentication biometrics information with higher quality.

(C) Orientation

As shown in FIG. 9A, when the face of the target person to be matched in the captured image is not facing the front, the authentication server 10 (camera control unit 16) switches the camera 30 to another camera 30 or changes the angle of the camera 30 in accordance with the body part, for example. Thus, the authentication server 10 (camera control unit 16) can sharpen the face portion from which the authentication biometrics information is acquired as shown in FIG. 9B, and acquire the authentication biometrics information (face image M1) with higher quality.

(D) Brightness

As shown in FIG. 10A, when the brightness of the target person to be matched and the body part in the captured image is low (that is, dark), the authentication server 10 (camera control unit 16) changes the brightness of the body part by, for example, signal processing in the camera 30 or lighting of illumination (not shown) mounted on the camera 30. Thus, the authentication server 10 (camera control unit 16) can brighten the body part from which the authentication biometrics information is acquired as shown in FIG. 10B and acquire the authentication biometrics information with higher quality.

(E) Shielding object

As shown in FIG. 11A, when the body part of the target person to be matched is shielded by the shield object in the captured image, the authentication server 10 (camera control unit 16) switches the camera 30 to another camera 30 or changes the angle of the camera 30 in accordance with the body part, for example. Thus, the authentication server 10 (camera control unit 16) can sharpen the face portion from which the authentication biometrics information is acquired as shown in FIG. 11B, and acquire the authentication biometrics information (face image M1) with higher quality.

Next, the authentication server 10 (authenticating unit 15) performs biometrics authentication with the authentication biometrics information and the same type of registered biometrics information registered in the database 20 (step S108). The authenticating unit 15 has a plurality of biometrics authentication engines (not shown) corresponding to the plurality of pieces of biometrics information, respectively.

When the authentication server 10 (authenticating unit 15) determines that there is registered biometrics information whose similarity (matching score) with the authentication biometrics information is equal to or greater than a predetermined threshold (step S109: YES), the authentication server 10 outputs a registrant ID associated with the registered biometrics information whose similarity (matching score) is the highest (step S110), and ends the process of FIG. 4. On the other hand, when it is determined that there is no registered biometrics information whose similarity (matching score) is equal to or greater than the predetermined threshold (step S109: NO), the authentication result in which there is no corresponding registrant is output (step S111), and the process of FIG. 4 is ended.

As described above, according to the present example embodiment, the authentication server 10 calculates quality values of a plurality of kinds of biometrics information detected from a single captured image, and performs authentication processing using the authentication biometrics information with the highest quality value. Therefore, authentication accuracy in biometrics authentication can be improved.

The authentication server 10 has a function of automatically controlling the cameras 30 so that the quality value of the specified authentication biometrics information is further increased. Therefore, authentication accuracy can be further improved.

In addition, since the authentication server 10 automatically performs specifying authentication biometrics information and camera control, it is not necessary for an engineer to manually adjust parameters for each biometrics information as in the related art. As a result, biometrics authentication (multimodal authentication) can be executed based on a uniform standard without depending on experience or skill of the engineer, and authentication accuracy can be uniformized at a high level.

Further, automatic control of the camera 30 in the authentication server 10 is executed in various modes corresponding to a plurality of indexes used to evaluate the quality. Specifically, when the size, sharpness, orientation, brightness, and presence or absence of a shielding object in a captured image of a body part from which biometrics information is acquired are indexes of quality evaluation, the automatic control of the camera 30 such as change of zoom magnification, change of focal length, adjustment of imaging direction, change of exposure time, and camera switching is executed. Thus, the quality value of the authentication biometrics information can be improved, and as a result, authentication accuracy is improved.

[Second Example embodiment]

Hereinafter, the biometrics authentication system 1 according to a second example embodiment will be described. Reference numerals that are common to the reference numerals denoted in the drawings of the first example embodiment indicate the same objects. Description of portions common to the first example embodiment will be omitted, and portions different from the first example embodiment will be described in detail.

In the first example embodiment described above, the authentication server 10 specifies authentication biometrics information with the highest quality value from among a plurality of kinds of biometrics information, and executes authentication processing. On the other hand, the present example embodiment differs from the first example embodiment in that the authentication server 10 selects a plurality of pieces of biometrics information satisfying a predetermined quality value from among a plurality of kinds of biometrics information to execute authentication processing.

FIG. 12 is a diagram showing an example of a relationship between a plurality of kinds of biometrics authentications and weightings for a matching score according to the present example embodiment. Here, it is assumed that biometrics information is acquired by a visible light camera, and face authentication, fingerprint authentication, and auricle authentication are arranged in the vertical direction in descending order of authentication accuracy. In addition, in the horizontal direction, it is shown that predetermined weighting is performed on a matching score (similarity) in which the result of each biometrics authentication is from the first place to the third place. Specifically, it is shown that "10" is weighted to the matching score of the person whose similarity between the face image and the registered face image is the first place in the face authentication, and "4" is weighted to the matching score of the person whose similarity is the third place in the face authentication. On the other hand, in the case of the auricle authentication with the lowest authentication accuracy, "3" is weighted to the matching score of the person whose similarity between the auricle image and the registered auricle image is the first place, and "1" is weighted to the matching score of the person whose similarity is the third place.

FIG. 13 is a flowchart showing an example of processing of the authentication server 10 according to the present example embodiment.

First, the authentication server 10 (image acquiring unit 11) acquires a captured image from the camera 30 (step S201). Next, the authentication server 10 (biometrics information detecting unit 12) determines whether or not there is a subject that matches a predetermined human-shape in the captured image (step S202) .

When the authentication server 10 determines that there is a subject that matches the predetermined human-shape in the captured image (step S202: YES), the process proceeds to step S203. On the other hand, when the authentication server 10 determines that there is no subject that matches the predetermined human-shape in the captured image (step S202: NO), the process of FIG. 13 ends.

In step S203, the authentication server 10 (biometrics information detecting unit 12) determines whether or not the biometrics information of the subject can be detected from the image area of the subject that matches the human-shape. The authentication server 10 (biometrics information detecting unit 12) detects a plurality of kinds of biometrics information which can be matched with a plurality of kinds of registered biometrics information registered in the database 20 from a single captured image.

When the authentication server 10 (biometrics information detecting unit 12) can detect biometrics information from a human-shaped subject (step S203: YES), the process proceeds to step S204. On the other hand, when the authentication server 10 cannot detect the biometrics information from the human-shaped subject (step S203: NO), the process of FIG. 13 ends.

In step S204, the authentication server 10 (quality evaluating unit 13) calculates a quality value for each of the plurality of kinds of biometrics information detected.

Next, the authentication server 10 (authenticating unit 15) selects a plurality of pieces of authentication biometrics information usable for biometrics authentication based on the calculated quality value (step S205). That is, biometrics information with a lower quality value is excluded.

Next, the authentication server 10 (authenticating unit 15) transmits the selected plurality of pieces of authentication biometrics information to the corresponding biometrics matching engine (step S206), and executes matching processing.

FIG. 14 is a diagram showing an example of a matching score for each biometrics information according to the present example embodiment. Here, the matching scores of the top three persons in three kinds of biometrics authentication (face authentication, fingerprint authentication, and auricle authentication) are shown. The parentheses in the figure indicate the registrant ID. For example, in the case of face authentication, matching score (similarity) for the registrant having the registrant ID "019" is "0.87", which is the highest. Similarly, in the case of fingerprint authentication, matching score for the registrant having the registrant ID "019" is "0.97", which is the highest. In the case of auricle authentication, matching score for the registrant having the registrant ID "019" is the third place.

Next, the authentication server 10 (authenticating unit 15) determines whether or not any one of the matching scores of the plurality of pieces of authentication biometrics information is equal to or greater than a threshold (reference value) (step S207). Here, when the authentication server 10 (authentication unit 15) determines that the authentication biometrics information having matching score equal to or greater than the threshold (reference value) exists (step S207: YES), the process proceeds to step S208. On the other hand, when the authentication server 10 (authentication unit 15) determines that all matching scores are less than the threshold (reference value) (step S207: NO), the authentication server 10 outputs an authentication result indicating that there is no applicable person (step S211), and the process of FIG. 13 ends.

In step S208, the authentication server 10 (authenticating unit 15) performs predetermined weighting on the matching score obtained by the plurality of biometrics authentications for each of piece of biometrics information to calculate a multimodal matching score.

Next, the authentication server 10 (authenticating unit 15) authenticates the authentication target person based on the multimodal matching score (step S209).

FIG. 15 is a diagram showing an example of a method of calculating a multimodal matching score according to the present example embodiment. Here, the multimodal matching score is calculated for each registrant ID from matching scores of the three kinds of biometrics authentication (face authentication, fingerprint authentication, and auricle authentication) shown in FIG. 14. The multimodal matching score is calculated by the following equation, for example.

```
(Multimodal matching score) = (Matching score of face
authentication) * (Weight factor according to the
ranking of face authentication) + (Matching score of
fingerprint authentication) * (Weight factor according
to the ranking of fingerprint authentication) +
(Matching score of auricle authentication) * (Weight
factor according to the ranking of auricle
authentication)
```

Therefore, when the face authentication matching score for the registrant having the registrant ID "019" is "0.87" and the weighting is "10", the matching score of the fingerprint authentication is "0.97 " and the weighting is "7", the matching score of the auricle authentication is "0.51" and the weighting is "1", the multimodal matching score is calculated as "0.87*10 + 0.97*7 + 0.51*1 = 16.0" based on the matching score shown in FIG. 14. When these are calculated for each registrant, the multimodal matching score for the registrant whose registrant ID is "019" becomes the maximum value, so that the authentication target person is authenticated as the person whose registrant ID is "019".

Then, the authentication server 10 (authenticating unit 15) outputs the registrant ID having the highest multimodal matching score (step S210), and ends the process of FIG. 13.

As described above, according to the present example embodiment, the authentication server 10 calculates the multimodal matching score using the weighting corresponding to the authentication accuracy, and authenticates the authentication target person. In other words, since the authentication is performed by combining the results of the plurality of biometrics authentication, the authentication accuracy can be further improved.

[Third Example embodiment]

Hereinafter, the biometrics authentication system 1 according to a third example embodiment will be described. Reference numerals that are common to the reference numerals denoted in the drawings of the first example embodiment indicate the same objects. Description of portions common to the first and second example embodiments will be omitted, and portions different from the first and second example embodiments will be described in detail.

The authentication server 10 of present example embodiment is a configuration in which the automatic control function of the camera 30 described in first example embodiment is further added to the above-described second example embodiment, and other configurations are common.

FIG. 16 is a flowchart showing an example of processing of the authentication server 10 in the present example embodiment. This processing may be executed, for example, between steps S205 and S206 of FIG. 13 described above.

First, the authentication server 10 (specifying unit 14) specifies biometrics information having the highest authentication accuracy from among the plurality of pieces of the selected authentication biometrics information (step S301). It is assumed that the degree of accuracy and ranking of authentication in a plurality of kinds of biometrics authentication are defined in advance. For example, when a visible light camera is used as the camera 30, the order of authentication accuracy can be defined as face authentication, fingerprint authentication, and auricle authentication.

Next, the authentication server 10 (camera control unit 16) controls the camera 30 such that the quality of the authentication biometrics information specified in step S301 is further increased (step S302) . For example, when biometrics information (face image) corresponding to face authentication is specified, the camera 30 is controlled so as to increase the quality value of the face image.

Then, the authentication server 10 (camera control unit 16) controls the camera 30 to update the authentication biometrics information with the plurality of newly detected biometrics information (step S303), and the process proceeds to step S206 in FIG. 13.

According to the present example embodiment, the authentication server 10 can control the camera 30 so as to further increase the quality value of the biometrics information having the highest authentication accuracy among the plurality of authentication biometrics information. Therefore, authentication accuracy can be further improved.

[Fourth Example embodiment]

FIG. 17 is a block diagram showing functions of the information processing apparatus 100 in the present example embodiment. The information processing apparatus 100 according to the present example embodiment includes a detecting unit 110 that detects a plurality of pieces of biometrics information about the same subject from a captured image being input, an evaluating unit 120 that evaluates quality in biometrics authentication for each piece of the biometrics information, and a specifying unit 130 that specifies authentication biometrics information to be used in the biometrics authentication to the subject from among the plurality of pieces of biometrics information based on the quality. According to the present example embodiment, authentication accuracy in biometrics authentication can be improved.

[Modified Example embodiments]

Although this disclosure has been described above with reference to the example embodiments, this disclosure is not limited to the example embodiments described above. Various modifications that may be understood by those skilled in the art can be made to the configuration and details of this disclosure within the scope not departing from the spirit of this disclosure. For example, it should be understood that an example embodiment in which a part of the configuration of any of the example embodiments is added to another example embodiment or an example embodiment in which a part of the configuration of any of the example embodiments is replaced with a part of another example embodiment is also one of the example embodiments to which this disclosure may be applied.

In the above-described example embodiment, the quality values of the plurality of pieces of (the plurality of kinds of) biometrics information are calculated to specify the authentication biometrics information, but the authentication biometrics information may be specified using a learning model in which the relationship between the plurality of pieces of biometrics information and the authentication biometrics information used for biometrics authentication is learned in advance. In addition, the authentication server 10 may further include a learning unit that performs learning of the learning model by updating a weighting between nodes of a neural network outputting the authentication biometrics information related to the plurality of pieces of biometrics information being input. By using the learning model, it is possible to increase the speed of authentication processing.

FIG. 18 is a schematic diagram showing a neural network used for learning processing in a modified example embodiment. The neural network shown in FIG. 18 includes an input layer having a plurality of nodes, intermediate layers having a plurality of nodes, and an output layer having one node. The plurality of kinds of biometrics information, which is an input value, is input to nodes of the input layer. Some nodes of the intermediate layers are connected to each node of the input layer. Each element of the input value input to the nodes of the intermediate layers is used for calculation in each node of the intermediate layer. Each node of the intermediate layers calculates an operation value using, for example, an input value input from nodes of the input layer, a predetermined weighting coefficient, and a predetermined bias value. Some nodes of the intermediate layers are connected to the output layer, and output the calculated operation value to the node of the output layer. The node of the output layer receives the operation value from some nodes of the intermediate layers.

The node of the output layer outputs a value indicating the optimum authentication biometrics information M by using the operation value inputted from some nodes of the intermediate layers, a weighting coefficient, and a bias value. When learning the neural network, for example, backpropagation is used. Specifically, an output value acquired from the teacher data is compared with an output value acquired when the data is input to the input layer, and an error between the two compared output values is fed back to the intermediate layers. This operation is repeated until the error falls below a predetermined threshold. By such learning processing, when any biometrics information is inputted to the neural network (learning model), a value indicating the optimum authentication biometrics information M can be outputted.

Some functions of the authentication server 10 may be provided in the camera 30. For example, pattern matching based on a predetermined human-shape may be performed on the camera 30 side, and an image region matching the human-shape may be cut out from the captured image and transmitted to the authentication server 10. Alternatively, the camera 30 may detect a plurality of kinds of biometrics information from the captured image to transmit the detected biometrics information to the authentication server 10. In this case, there is an advantage that the processing load in the authentication server 10 is reduced.

Although the automatic control of the camera 30 is performed in the first example embodiment, the automatic control of the camera 30 may not be performed. In this case, when authentication biometrics information having a quality satisfying a predetermined threshold value is obtained, biometrics authentication can be executed quickly.

In the example embodiment described above, the authentication server 10 acquires the captured image from the camera 30 connected via the network NW, but the acquisition source is not limited to the camera 30. For example, the authentication server 10 may detect biometrics information by inputting a captured image optically or electronically read by a medium reading apparatus such as a scanner (not shown). Similarly, a captured image transmitted from a user terminal such as a smartphone or a personal computer via the network NW may be received to detect biometrics information.

In the above-described example embodiment, the authentication server 10 expresses the quality of the biometrics information by a quality value, but the quality may be expressed by a value other than a numeric value. For example, instead of numerical values, the quality may be evaluated and classified into "high", "normal", and "low".

Although the authentication server 10 selects the authentication biometrics information corresponding to the biometrics authentication with the highest authentication accuracy from among the plurality of authentication biometrics information in the third example embodiment described above, other conditions may be employed in the selection. For example, the authentication server 10 (camera control unit 16) may control the camera 30 so that the quality value of the authentication biometrics information with the highest quality value among the plurality of authentication biometrics information becomes higher.

Further, the scope of the example embodiments also includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the program described above is stored but also the program itself.

As the storage medium, for example, a floppy (registered trademark) disk, a hard disk, an optical disk, a magneto-optical disk, a CD-ROM, a magnetic tape, a nonvolatile memory card, or the like can be used. Further, the scope of each of the example embodiments includes an example that operates on OS to perform a process in cooperation with another software or a function of an add-in board without being limited to an example that performs a process by an individual program stored in the storage medium.

The whole or part of the example embodiments disclosed above can be described as, but not limited to, the following supplementary notes.

(Supplementary Note 1)

An information processing apparatus comprising:

a detecting unit that detects a plurality of pieces of biometrics information about the same subject from a captured image being input;
an evaluating unit that evaluates quality in biometrics authentication for each piece of the biometrics information; and
a specifying unit that specifies authentication biometrics information to be used in the biometrics authentication to the subject from among the plurality of pieces of biometrics information based on the quality.

(Supplementary Note 2)

The information processing apparatus according to supplementary note 1,

wherein the plurality of pieces of the biometrics information is detected from a single captured image.

(Supplementary Note 3)

The information processing apparatus according to supplementary note 1 or 2,
wherein the plurality of pieces of biometrics information is detected from different body parts of the subject.

(Supplementary Note 4)

The information processing apparatus according to supplementary note 3,
wherein the plurality of pieces of biometrics information is detected for the subject that matches a predetermined human-shape from the captured image.

(Supplementary Note 5)

The information processing apparatus according to supplementary note 3 or 4, further comprising:
a camera control unit that controls a camera for capturing the captured image so as to increase the quality of the authentication biometrics information specified by the specifying unit.

(Supplementary Note 6)

The information processing apparatus according to any one of supplementary notes 3 to 5, further comprising:
an authenticating unit that executes the biometrics authentication to the subject based on the authentication biometrics information.

(Supplementary Note 7)

The information processing apparatus according to supplementary note 6,

wherein the specifying unit specifies the authentication biometrics information having the highest quality, and
wherein the authenticating unit authenticates the subject based on a similarity of the authentication biometrics information with respect to registered biometrics information.

(Supplementary Note 8)

The information processing apparatus according to supplementary note 6,

wherein the specifying unit specifies a plurality of pieces of authentication biometrics information, and
wherein the authenticating unit authenticates the subject based on a similarity calculated for each piece of the authentication biometrics information with respect to registered biometrics information.

(Supplementary Note 9)

The information processing apparatus according to supplementary note 8,
wherein the specifying unit specifies a predetermined number of pieces of authentication biometrics information in descending order of the quality.

(Supplementary Note 10)

The information processing apparatus according to supplementary note 8 or 9,
wherein the authenticating unit calculates the similarity by weighting each piece of authentication biometrics information.

(Supplementary Note 11)

The information processing apparatus according to any one of supplementary notes 3 to 10,
wherein the evaluating unit evaluates the quality based on at least one of a size, sharpness, orientation, and brightness of the body part in the captured image.

(Supplementary Note12)

The information processing apparatus according to any one of supplementary notes 3 to 10,
wherein the evaluating unit evaluates the quality based on a positional relationship between the body part and an object shielding the body part in the captured image.

(Supplementary Note 13)

The information processing apparatus according to supplementary note 5,
wherein the camera control unit controls at least one of a zoom magnification, a focal length, a direction, and an exposure in order to capture the body part from which the authentication biometrics information is detected.

(Supplementary Note 14)

The information processing apparatus according to supplementary note 5,
wherein the camera control unit switches from among the plurality of cameras to the camera with the highest quality regarding the authentication biometrics information to capture an image.

(Supplementary Note 15)

The information processing apparatus according to supplementary note 13 or 14,

wherein the specifying unit specifies a plurality of pieces of the authentication biometrics information, and
wherein the camera control unit controls the camera such that the quality of the authentication biometrics information corresponding to the biometrics authentication with the highest authentication accuracy among the plurality of pieces of authentication biometrics information is further increased.

(Supplementary Note 16)

The information processing apparatus according to supplementary note 13 or 14,

wherein the specifying unit specifies the plurality of pieces of the authentication biometrics information, and
wherein the camera control unit controls the camera such that the quality of the authentication biometrics information having the highest quality among the plurality of pieces of the authentication biometrics information is further increased.

(Supplementary Note 17)

An information processing apparatus comprising:

a detecting unit that detects a plurality of pieces of biometrics information about the same subject from a captured image being input; and
a specifying unit that specifies authentication biometrics information to be used in biometrics authentication among the plurality of pieces of biometrics information based on a learning model in which a relationship between the plurality of pieces of biometrics information and the authentication biometrics information is learned in advance.

(Supplementary Note 18)

The information processing apparatus according to supplementary note 17, further comprising:
a learning unit that performs learning of the learning model by updating a weighting between nodes of a neural network outputting the authentication biometrics information related to the plurality of pieces of biometrics information being input.

(Supplementary Note 19)

An information processing method comprising:

detecting a plurality of pieces of biometrics information about the same subject from a captured image being input;
evaluating quality in biometrics authentication for each piece of the biometrics information; and

specifying authentication biometrics information to be used in the biometrics authentication to the subject from among the plurality of pieces of biometrics information based on the quality.

(Supplementary Note 20)

A storage medium storing a program that causes a computer to perform:

detecting a plurality of pieces of biometrics information about the same subject from a captured image being input;
evaluating quality in biometrics authentication for each piece of the biometrics information; and
specifying authentication biometrics information to be used in the biometrics authentication to the subject from among the plurality of pieces of biometrics information based on the quality.

[Reference Signs List]

NW  network

| | |
|---|---|
| 1 | biometrics authentication system |
| 10 | authentication server |
| 11 | image acquiring unit |
| 12 | biometrics information detecting unit |
| 13 | quality evaluating unit |
| 14 | specifying unit |
| 15 | authenticating unit |
| 16 | camera control Unit |
| 20 | database |
| 30 | camera |
| 100 | information processing apparatus |
| 110 | detecting unit |
| 120 | evaluating unit |
| 130 | specifying unit |
| 151 | CPU |
| 152 | RAM |
| 153 | ROM |
| 154 | HDD |
| 155 | communication I /F |
| 156 | display device |
| 157 | input device |
| 158 | bus line |

**Claims**

1.  An information processing apparatus comprising:

a detecting unit that detects a plurality of pieces of biometrics information about the same subject from a captured image being input;
an evaluating unit that evaluates quality in biometrics authentication for each piece of the biometrics information; and
a specifying unit that specifies authentication biometrics information to be used in the biometrics authentication to the subject from among the plurality of pieces of biometrics information based on the quality.

2.  The information processing apparatus according to claim 1,
wherein the plurality of pieces of the biometrics information is detected from a single captured image.

3.  The information processing apparatus according to claim 1 or 2,
wherein the plurality of pieces of biometrics information is detected from different body parts of the subject.

4.  The information processing apparatus according to claim 3,

wherein the plurality of pieces of biometrics information is detected for the subject that matches a predetermined human-shape from the captured image.

5. The information processing apparatus according to claim 3 or 4, further comprising:
a camera control unit that controls a camera for capturing the captured image so as to increase the quality of the authentication biometrics information specified by the specifying unit.

6. The information processing apparatus according to any one of claims 3 to 5, further comprising:
an authenticating unit that executes the biometrics authentication to the subject based on the authentication biometrics information.

7. The information processing apparatus according to claim 6,

wherein the specifying unit specifies the authentication biometrics information having the highest quality, and
wherein the authenticating unit authenticates the subject based on a similarity of the authentication biometrics information with respect to registered biometrics information.

8. The information processing apparatus according to claim 6,

wherein the specifying unit specifies a plurality of pieces of authentication biometrics information, and
wherein the authenticating unit authenticates the subject based on a similarity calculated for each piece of the authentication biometrics information with respect to registered biometrics information.

9. The information processing apparatus according to claim 8,
wherein the specifying unit specifies a predetermined number of pieces of authentication biometrics information in descending order of the quality.

10. The information processing apparatus according to claim 8 or 9,
wherein the authenticating unit calculates the similarity by weighting each piece of authentication biometrics information.

11. The information processing apparatus according to any one of claims 3 to 10,
wherein the evaluating unit evaluates the quality based on at least one of a size, sharpness, orientation, and brightness of the body part in the captured image.

12. The information processing apparatus according to any one of claims 3 to 10,
wherein the evaluating unit evaluates the quality based on a positional relationship between the body part and an object shielding the body part in the captured image.

13. The information processing apparatus according to claim 5,
wherein the camera control unit controls at least one of a zoom magnification, a focal length, a direction, and an exposure in order to capture the body part from which the authentication biometrics information is detected.

14. The information processing apparatus according to claim 5,
wherein the camera control unit switches from among the plurality of cameras to the camera with the highest quality regarding the authentication biometrics information to capture an image.

15. The information processing apparatus according to claim 13 or 14,

wherein the specifying unit specifies a plurality of pieces of the authentication biometrics information, and
wherein the camera control unit controls the camera such that the quality of the authentication biometrics information corresponding to the biometrics authentication with the highest authentication accuracy among the plurality of pieces of authentication biometrics information is further increased.

16. The information processing apparatus according to claim 13 or 14,

wherein the specifying unit specifies the plurality of pieces of the authentication biometrics information, and
wherein the camera control unit controls the camera such that the quality of the authentication biometrics information having the highest quality among the plurality of pieces of the authentication biometrics information is further increased.

17. An information processing apparatus comprising:

a detecting unit that detects a plurality of pieces of biometrics information about the same subject from a captured image being input; and
a specifying unit that specifies authentication biometrics information to be used in biometrics authentication among the plurality of pieces of biometrics information based on a learning model in which a relationship between the plurality of pieces of biometrics information and the authentication biometrics information is learned in advance.

18. The information processing apparatus according to claim 17, further comprising:
a learning unit that performs learning of the learning model by updating a weighting between nodes of a neural network outputting the authentication biometrics information related to the plurality of pieces of biometrics information being input.

19. An information processing method comprising:

detecting a plurality of pieces of biometrics information about the same subject from a captured image being input;
evaluating quality in biometrics authentication for each piece of the biometrics information; and
specifying authentication biometrics information to be used in the biometrics authentication to the subject from among the plurality of pieces of biometrics information based on the quality.

20. A storage medium storing a program that causes a computer to perform:

detecting a plurality of pieces of biometrics information about the same subject from a captured image being input;
evaluating quality in biometrics authentication for each piece of the biometrics information; and
specifying authentication biometrics information to be used in the biometrics authentication to the subject from among the plurality of pieces of biometrics information based on the quality.

# FIG. 1

1

10

AUTHENTICATION SERVER

11
IMAGE
ACQUIRING UNIT

14
SPECIFYING UNIT

12
BIOMETRICS
INFORMATION
DETECTING UNIT

15
AUTHENTICATING
UNIT

13
QUALITY
EVALUATING UNIT

16
CAMERA
CONTROL UNIT

20
DATABASE

30
CAMERA
(1)

■ ■ ■

30
CAMERA
(N)

NW

# FIG. 2

| REGISTRANT ID | NAME | GENDER | AGE | FACE IMAGE | FINGERPRINT IMAGE | PALM PRINT IMAGE | AURICLE IMAGE | ... |
|---|---|---|---|---|---|---|---|---|
| 10001 | AAA aaa | M | 35 | | [FINGERPRINT IMAGE1] | [PALM PRINT IMAGE1] | [AURICLE IMAGE1] | ... |
| 10002 | BBB bbb | F | 25 | | [FINGERPRINT IMAGE2] | [PALM PRINT IMAGE2] | [AURICLE IMAGE2] | ... |
| 10003 | CCC ccc | M | 28 | | [FINGERPRINT IMAGE3] | [PALM PRINT IMAGE3] | [AURICLE IMAGE3] | ... |
| 10004 | DDD ddd | M | 24 | | [FINGERPRINT IMAGE4] | [PALM PRINT IMAGE4] | [AURICLE IMAGE4] | ... |
| | | | | | : | | | |

EP 3 955 205 A1

# FIG. 3

10

AUTHENTICATION SERVER

151
CPU

158

155
COMMUNICATION I/F

152
RAM

156
DISPLAY DEVICE

153
ROM

157
INPUT DEVICE

154
HDD

FIG. 4

```
                    ┌─────────────┐
                    │    START    │
                    └──────┬──────┘
                           │
           ┌───────────────────────────────┐
           │   ACQUIRE CAPTURED IMAGE       │── S101
           └───────────────┬───────────────┘
                           │
                    ╱─────────────╲           S102
                   ╱   IS HUMAN-    ╲    NO
                  ╱ SHAPE DETECTED?  ╲──────────────────────┐
                   ╲                 ╱                       │
                    ╲───────────────╱                       │
                           │ YES                            │
                    ╱─────────────╲           S103          │
                   ╱ IS BIOMETRICS  ╲   NO                  │
                  ╱ INFORMATION      ╲────────────────────► │
                   ╲ DETECTED?       ╱                       │
                    ╲───────────────╱                       │
                           │ YES                            │
           ┌───────────────────────────────┐                │
           │  CALCULATE QUALITY VALUE FOR   │── S104         │
           │  EACH PIECES OF BIOMETRICS     │                │
           │        INFORMATION             │                │
           └───────────────┬───────────────┘                │
           ┌───────────────────────────────┐                │
           │   SPECIFY BIOMETRICS           │── S105         │
           │   INFORMATION WITH THE         │                │
           │   HIGHEST QUALITY VALUE        │                │
           └───────────────┬───────────────┘                │
           ┌───────────────────────────────┐                │
           │      CONTROL CAMERA            │── S106         │
           └───────────────┬───────────────┘                │
           ┌───────────────────────────────┐                │
           │   UPDATE AUTHENTICATION        │── S107         │
           │   BIOMETRICS INFORMATION       │                │
           └───────────────┬───────────────┘                │
           ┌───────────────────────────────┐                │
           │         PERFORM                │── S108         │
           │  BIOMETRICS AUTHENTICATION     │                │
           └───────────────┬───────────────┘                │
                    ╱─────────────╲           S109           │
                   ╱    MATCHING    ╲   NO                   │
                  ╱ SCORE ≥ THRESHOLD?╲──────────┐           │
                   ╲                 ╱            │           │
                    ╲───────────────╱            │           │
                           │ YES   S110          │  S111     │
           ┌──────────────────────┐   ┌──────────────────────────┐
           │  OUTPUT ID OF THE     │   │ OUTPUT AUTHENTICATION     │
           │ AUTHENTICATED PERSON  │   │ RESULT WITH NO            │
           │                       │   │ APPLICABLE PERSON         │
           └──────────┬───────────┘   └────────────┬─────────────┘
                      │                             │
                      ◄─────────────────────────────┴──────────────┘
                      │
               ┌──────────────┐
               │     END      │
               └──────────────┘
```

## FIG. 5

IMG_1

## FIG. 6

IMG_2

## FIG. 7A

IMG_3

## FIG. 7B

IMG_4

## FIG. 8A

IMG_5

## FIG. 8B

IMG_6

# FIG. 9A

IMG_7

# FIG. 9B

IMG_8

# FIG. 10A

IMG_9

## FIG. 10B

IMG_10

## FIG. 11A

IMG_11

## FIG. 11B

IMG_12

FIG. 12

| | 1ST PLACE | 2ND PLACE | 3RD PLACE | ... |
|---|---|---|---|---|
| FACE AUTHENTICATION | 10 | 7 | 4 | ... |
| FINGERPRINT AUTHENTICATION | 7 | 5 | 3 | ... |
| AURICLE AUTHENTICATION | 3 | 2 | 1 | ... |
| : | | | | |

## FIG. 13

START

ACQUIRE CAPTURED IMAGE — S201

IS HUMAN-SHAPE DETECTED? — S202 — NO

YES

IS BIOMETRICS INFORMATION DETECTED? — S203 — NO

YES

CALCULATE QUALITY VALUE FOR EACH PIECES OF BIOMETRICS INFORMATION — S204

SELECT AUTHENTICATION BIOMETRICS INFORMATION BASED ON QUALITY VALUES — S205

SEND BIOMETRICS INFORMATION TO CORRESPONDING BIOMETRIC MATCHING ENGINE — S206

MATCHING SCORE ≥ THRESHOLD? — S207 — NO

YES — S208

WEIGHT EACH BIOMETRICS INFORMATION

OUTPUT AUTHENTICATION RESULT WITH NO APPLICABLE PERSON — S211

AUTHENTICATE PERSON BASED ON MULTIMODAL MATCHING SCORES — S209

OUTPUT ID OF THE AUTHENTICATED PERSON — S210

END

## FIG. 14

|  | 1ST PLACE | 2ND PLACE | 3RD PLACE |
|---|---|---|---|
| FACE AUTHENTICATION | 0.87(019) | 0.71(003) | 0.42(029) |
| FINGERPRINT AUTHENTICATION | 0.97(019) | 0.15(029) | 0.03(003) |
| AURICLE AUTHENTICATION | 0.63(003) | 0.62(029) | 0.51(019) |
| ⋮ | | | |

## FIG. 15

| REGISTRANT ID | MULTIMODAL MATCHING SCORE |
|---|---|
| 019 | 0.87*10 + 0.97*7 + 0.51*1 = 16.0 |
| 029 | 0.42* 4 + 0.15*5 + 0.62*2 = 3.67 |
| 003 | 0.71* 7 + 0.03*3 + 0.63*3 = 6.95 |
| ⋮ | |

## FIG. 16

S205

SPECIFY BIOMETRICS INFORMATION WITH THE HIGHEST AUTHENTICATION ACCURACY — S301

CONTROL CAMERA — S302

UPDATE AUTHENTICATION BIOMETRICS INFORMATION — S303

S206

# FIG. 17

INFORMATION PROCESSING APPARATUS 100

DETECTING UNIT 110

EVALUATING UNIT 120

SPECIFYING UNIT 130

# FIG. 18

INPUT LAYER | INTERMEDIATE LAYERS | OUTPUT LAYER

$x(1)$

$x(2)$

$x(n)$

M

## INTERNATIONAL SEARCH REPORT

| International application No. |
| --- |
| PCT/JP2019/016034 |

### A. CLASSIFICATION OF SUBJECT MATTER
Int. Cl. G06T7/00(2017.01)i

According to International Patent Classification (IPC) or to both national classification and IPC

### B. FIELDS SEARCHED

Minimum documentation searched (classification system followed by classification symbols)
Int. Cl. G06T7/00

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2009-110132 A (HITACHI, LTD.) 21 May 2009, entire text, all drawings & US 2009/0110249 A1, entire document & EP 2056236 A2 & CN 101425130 A & KR 10-2009-0043432 A | 1-20 |
| A | JP 2006-221514 A (CANON INC.) 24 August 2006, entire text, all drawings & US 2006/0182318 A1, entire document & CN 1831845 A | 1-20 |
| A | JP 2007-117413 A (KYOCERA CORP.) 17 May 2007, entire text, all drawings & US 2009/0304237 A1, entire document & WO 2007/001025 A1 | 1-20 |

☒ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>27.06.2019 | Date of mailing of the international search report<br>09.07.2019 |
| Name and mailing address of the ISA/<br>   Japan Patent Office<br>   3-4-3, Kasumigaseki, Chiyoda-ku,<br>   Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2019/016034 |

C (Continuation). DOCUMENTS CONSIDERED TO BE RELEVANT

| Category* | Citation of document, with indication, where appropriate, of the relevant passages | Relevant to claim No. |
|---|---|---|
| A | US 2012/0314911 A1 (ACCENTURE GLOBAL SERVICES LIMITED) 13 December 2012, entire document & EP 2533171 A2, entire document & CN 102842042 A | 1-20 |
| A | US 2006/0171571 A1 (CHAN et al.) 03 August 2006, entire document & GB 2456428 A, entire document | 1-20 |
| A | US 2017/0236017 A1 (3M INNOVATIVE PROPERTIES COMPANY) 17 August 2017, entire document & WO 2016/022403 A1, entire document | 1-20 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013120580 A